# EUROPÄISCHE PATENTSCHRIFT

(11) **EP 2 983 100 B1**
(45) Veröffentlichungstag und Bekanntmachung des Hinweises auf die Patenterteilung: **10.07.2019**
(21) Anmeldenummer: 15166199.8
(22) Anmeldetag: 04.05.2015
(51) Int. Cl.: G06F 21/31, G06F 21/62, G06F 21/64

(54) **SCHUTZ VON DATEN EINER NUMERISCHEN STEUERUNG**
PROTECTING DATA OF A NUMERICAL CONTROL SYSTEM
PROTECTION DE DONNÉES D'UNE COMMANDE NUMÉRIQUE

(30) Priorität: 04.08.2014 DE 102014215310
(43) Veröffentlichungstag der Anmeldung: 10.02.2016
(73) Patentinhaber: Dr. Johannes Heidenhain GmbH, 83301 Traunreut (DE)
(72) Erfinder: Rutkowski, Christian, 83278 Traunstein (DE)

(56) Entgegenhaltungen:
- EP-B1- 1 914 612
- US-A1- 2014 165 166
- US-B1- 6 725 240

## Beschreibung

### BEZEICHNUNG DER ERFINDUNG

### Schutz von Daten einer Numerischen Steuerung

### GEBIET DER TECHNIK

Die vorliegende Erfindung betrifft ein Verfahren zum Schützen von Daten einer Numerischen Steuerung für Werkzeugmaschinen, soweit diese Daten in Tabellenform im Dateisystem von Numerischen Steuerungen abgelegt sind. Es ist dabei oft gewünscht, zumindest einen Teil der Daten, die verschiedenste Aspekte der Steuerung oder der Werkzeugmaschine betreffen können, gegen versehentliche oder nicht autorisierte Änderungen zu schützen.

### STAND DER TECHNIK

In den Daten einer Numerischen Steuerung sind Informationen abgelegt, mit denen die Steuerung an einen bestimmten Typ von Werkzeugmaschine, oder auch an eine ganz konkrete Werkzeugmaschine angepasst werden.

Ein Beispiel für in Tabellenform abgelegte Daten beschreibt die EP 1914612 B1. Die Daten betreffen hier die Kinematik einer Werkzeugmaschine, indem sie nacheinander die verschiedenen Maschinenachsen beschreiben, die vom Werkzeugmittelpunkt zum Maschinenbett führen. Diese Angaben sind für alle Maschinen eines Typs gleich. Es werden aber auch bestimmte Achsfehler konfiguriert und in Tabellenform abgelegt, die spezifisch für eine ganz bestimmte Maschine sind. Hieraus resultiert die Notwendigkeit, die in so einer Tabelle enthalten Daten zu verschiedenen Zeitpunkten und von verschiedenen Bearbeitern editieren zu lassen. Zudem ist es wünschenswert, bestimmte Einträge in solchen Konfigurationstabellen gegen versehentliche oder nicht autorisierte Änderungen zu schützen.

Aus der US 6725240 B1 ist ein Verfahren bekannt, mit dem die nachträgliche Veränderung von tabellarisch abgelegten Protokolldaten erkannt werden kann. Hierzu wird der Tabelle eine zusätzliche Sicherheitsspalte angefügt, in der jeweils ein Hashwert der weiteren Zellen einer Zeile der Tabelle eingetragen wird. Anhand dieses Hashwerts lassen sich nachträglich vorgenommene Änderungen erkennen, wenn man beim Auslesen der Daten einer Tabellenzeile deren Hashwert erneut berechnet, und mit dem in der Sicherheitsspalte eingetragenen Hashwert dieser Zeile vergleicht. Mit diesem Verfahren können Änderungen zwar erkannt, aber nicht verhindert werden.

Aus der US 7155612 B2 ist es bekannt, mittels eines umfangreichen, datenbankgestützten Systems zum Verwalten von Zugriffsrechten einzelner Nutzer sowohl den lesenden als auch den schreibenden Zugriff auf bestimmte Teile von einer in Tabellenform vorliegenden Datenbank zu regeln. Ein solches System wäre aber für eine Numerische Steuerung viel zu aufwändig.

Aus der US 2014/0165166 A1 ist ein Verfahren bekannt, mit dem der Zugriff auf ein digital gespeichertes Objekt mittels eines Passworts und einer Hashfunktion kontrolliert wird. Dabei erfasst ein Zähler die Anzahl der Zugriffe. Die Anzahl wird in der Hashfunktion berücksichtigt, so dass nach einer gewissen Anzahl von Zugriffen ein weiterer Zugriff nicht mehr möglich ist.

### ZUSAMMENFASSUNG DER ERFINDUNG

Es ist daher Aufgabe der Erfindung, ein Verfahren zum Schützen von Daten einer Numerischen Steuerung anzugeben, mit dem in besonders einfacher Weise in tabellarischer Form abgelegte Daten gegen nicht autorisierte oder versehentliche Änderungen geschützt werden können. Es soll dabei möglich sein, dass die Daten von verschiedenen Instanzen bearbeitet und geschützt werden können.

Diese Aufgabe wird gelöst durch ein Verfahren gemäß Anspruch 1. Vorteilhafte Details dieses Verfahrens ergeben sich auch aus den von Anspruch 1 abhängigen Ansprüchen.

Es wird ein Verfahren zum Schützen von in einer Tabelle gespeicherten Daten einer Numerischen Steuerung für Werkzeugmaschinen gegen nicht autorisierte oder versehentliche Änderungen beschrieben, gemäß dem in einer Sicherheitsspalte der Tabelle eine Information über den Schutz der in einer ausgewählten Zeile enthaltenen Daten abgelegt sind, mit den folgenden Schritten:
- erstmaliges Eingeben eines Passworts in eine in der ausgewählten Zeile liegenden aktuellen Zelle der Sicherheitsspalte,
- Berechnen eines neuen Hashwerts des Passworts und Speichern dieses Hashwerts in der aktuellen Zelle als gespeicherter Hashwert,
wobei bei einem erneuten, schreibenden Zugriff auf eine so geschützte, ausgewählte Zeile das Passwort erneut in die aktuelle Zelle der Sicherheitsspalte eingegeben und der neue Hashwert des erneut eingegebenen Passworts berechnet und mit dem in der aktuellen Zelle der Sicherheitsspalte gespeicherten Hashwert verglichen wird, wobei der schreibende Zugriff auf die ausgewählte Zeile nur freigegeben wird, wenn der neue Hashwert und der gespeicherte Hashwert übereinstimmen.

Die erstmalige Eingabe eines Passworts in eine aktuelle Zelle der Sicherheitsspalte bedeutet also, dass dieses Passwort nicht direkt in die Tabelle geschrieben wird, sondern dass zunächst ein Hashwert generiert wird, der dann in der Tabelle abgelegt wird. Da sich aus so einem Hashwert das ursprüngliche Passwort nicht oder nur mit hohem Aufwand errechnen lässt, kann der Hashwert in der Tabelle zwar mittels verschiedener Standardprogramme (z.B. Texteditor) ausgelesen werden, das Passwort ist damit aber nicht offenbart.

Beim Anzeigen einer Tabelle auf der Bedienoberfläche der Numerischen Steuerung werden anstelle der Hashwerte lediglich Platzhalter angezeigt, die den Bediener sofort darauf hinweisen, dass die betreffende Zeile nur durch erneute Eingabe des korrekten Passworts verändert werden kann. Auch bei der erneuten Eingabe des Passworts anstelle der Platzhalter wird dieses Passwort nicht direkt in die Tabelle geschrieben, sondern lediglich ein Hashwert des erneut eingegebenen Passworts gebildet, der dann mit dem gespeicherten Hashwert verglichen wird.

Um Änderungen an der Tabelle mittels Standardprogrammen außerhalb der eigentlichen Steuerungssoftware zumindest sofort erkennbar zu machen, sollte die Steuerung zu jeder Zeile auch einen weiteren Hashwert über die ganze Zeile (inklusive des als Hashwert gespeicherten Passworts) bilden und ebenfalls in der Sicherheitsspalte (oder einer separaten Spalte) ablegen. Somit kann eine Manipulation der Tabelle beim Auslesen der Steuerung sofort erkannt werden und mit einer entsprechenden Fehlermeldung quittiert werden.

Weitere Vorteile und Einzelheiten der vorliegenden Erfindung ergeben sich aus der nachfolgenden Beschreibung der Erfindung anhand der Figuren.

### KURZE BESCHREIBUNG DER ZEICHNUNGEN

Dabei zeigt
- Figur 1: eine Tabelle mit Daten einer Numerischen Steuerung,
- Figur 2: ein Ablaufdiagram für das Verfahren zum Schützen von in der Tabelle gespeicherten Daten.

### BESCHREIBUNG DER AUSFÜHRUNGSFORMEN

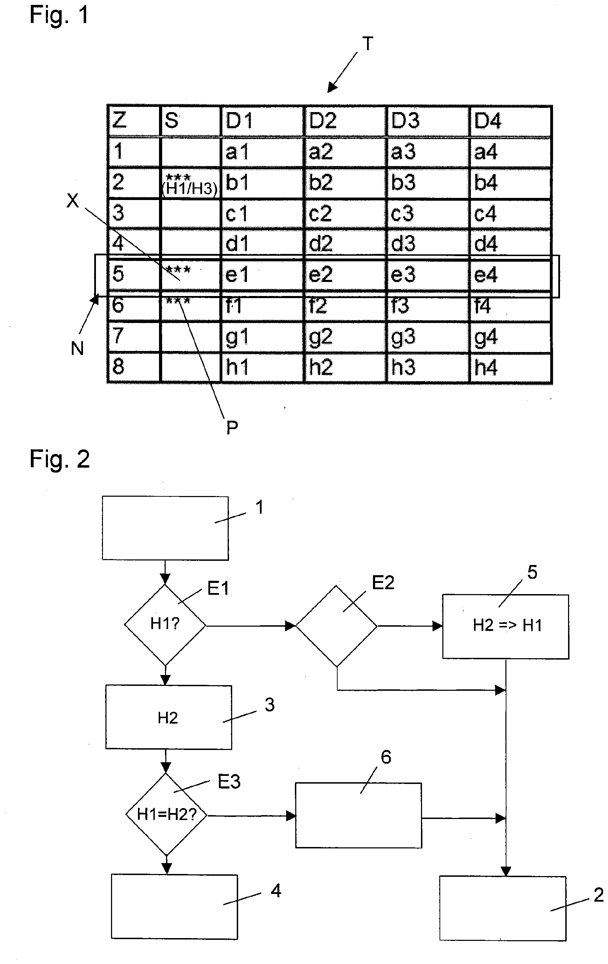

Die Figur 1 zeigt eine Tabelle T, in deren Zeilen und Spalten Daten einer Numerischen Steuerung abgelegt sind. Die eigentlichen Daten a1 - h4 sind dabei in den Datenspalten D1 - D4 abgelegt. In einer Zeilennummernspalte Z sind die Zeilen der Tabelle T durchnummeriert, in einer zusätzlichen Sicherheitsspalte S sind die für das erfindungsgemäße Verfahren wichtigen Daten abgelegt.

Die Tabelle T wird im Dateisystem der Numerischen Steuerung vorzugsweise in einem Textformat mit fester Formatierung abgespeichert, oder in einem anderen, von gängigen PC-Programmen lesbaren Format. Dies ermöglicht es, die Daten unautorisiert mit nicht dafür vorgesehenen Programmen, z.B. einem Texteditor, zu verändern. Ferner können die gespeicherten Daten durch einen Defekt des Speichermediums verfälscht werden.

Die Numerische Steuerung zeigt einem Benutzer die Tabelle T in der in Figur 1 dargestellten Weise an. Der Benutzer kann eine Zeile auswählen und dann die einzelnen in dieser Zeile enthaltenen Daten eingeben und/oder ändern. In der Figur 1 ist die aktuell zur Bearbeitung ausgewählte Zeile N eingerahmt.

Sind in einer ausgewählten Zeile N in der aktuellen Zelle X der Sicherheitsspalte S Platzhalter P angezeigt, so weist dies den Benutzer darauf hin, dass Änderungen nur dann möglich sind, wenn ein Passwort anstelle der Platzhalter P eingegeben wird. Ein Hashwert H1 dieses Passworts ist in der Sicherheitsspalte S in jeder geschützten Zeile gespeichert. Ist in einer Zeile kein Hashwert hinterlegt, so können die Daten in dieser Zeile ohne die Eingabe eines Passworts geändert werden. Wird in so einer Zeile jedoch ein Passwort eingegeben, so wird ein neuer Hashwert H2 dieses Passworts gebildet und in der Sicherheitspalte gespeichert (und somit zum gespeicherten Hashwert H1), so dass diese Zeile ab sofort mit jenem Passwort gegen Änderungen geschützt ist, und die Platzhalter P in der Sicherheitsspalte S angezeigt werden.

Anstelle der Platzhalter P könnte natürlich auch der Hashwert H1 selbst angezeigt werden. Da dieser aber keine für einen Bediener nützliche Information enthält (außer dass die jeweilige Zeile geschützt ist), ist die Anzeige eines Platzhalters P bevorzugt.

Für einen Benutzer ist es also anhand der Platzhalter P leicht zu erkennen, welche Zeilen der Tabelle T mit einem Passwort geschützt sind. Außerdem kann ein Benutzer eine ungeschützte Zeile sehr einfach mit einem Passwortschutz versehen. Da jede Zeile mit einem eigenen Passwort geschützt werden kann, ein Passwort also grundsätzlich zeilenbezogen wirkt, können die Zeilen von unterschiedlichen Instanzen geschützt werden. So können im oben genannten Beispiel einer Kinematiktabelle diejenigen Zeilen vom Maschinenhersteller geschützt werden, die den grundlegenden Aufbau eines zu steuernden Werkzeugmaschinentyps beschreiben. Maschinenspezifische, wegen Verschleiß evtl. sogar zeitlich veränderliche Fehler der Kinematik beschreibende Zeilen können später von einem Servicetechniker an einer konkreten Werkzeugmaschine gemessen, in die Tabelle T eingetragen und geschützt werden. Ein Bediener dieser Werkzeugmaschine, der in die Tabelle T evtl. noch die Daten einer konkreten Aufspannsituation eintragen muss, kann die zuvor erfassten Daten nicht verändern, und seine nur für einen Bearbeitungsvorgang gültigen Daten ungeschützt in die Tabelle T eintragen.

Zum Verändern oder Editieren einer Zeile ist auch das Löschen einer Zeile zu rechnen. Auch hierzu ist bei einer geschützten Zeile die Eingabe des richtigen Passworts nötig.

Ein Passwort kann auch wieder gelöscht werden, so dass die Zeile danach nicht länger geschützt ist. Hierzu kann beispielsweise ein Zeichen vereinbart werden, das als erstes Zeichen für ein Passwort verboten ist bzw. ignoriert wird. Gibt man nun dieses Zeichen, gefolgt vom korrekten Passwort in die Sicherheitsspalte S der bisher geschützten Zeile ein, so wird das Passwort gelöscht.

Um die Daten zusätzlich gegen Manipulationen zu schützen, wird, über den Inhalt aller Zellen einer Zeile einen weiteren Hashwert H3 gebildet, der auch den Hashwert H1 des Passworts einer Zeile berücksichtigt. Veränderungen mittels eines einfachen Texteditors oder eines sonstigen PC Programms, oder auch durch Schreib/Lesefehler verursachte Änderungen der Daten können so von der Steuerung beim Auslesen erkannt und mit einer Fehlermeldung quittiert werden. Die Bildung und Speicherung so eines weiteren Hashwerts H3 ist auch für ungeschützte Zeilen vorteilhaft, führt aber weder zur Anzeige von Platzhaltern P noch wird dadurch jede Zeile geschützt. Dieser weitere Hashwert H3 kann zusammen mit dem gespeicherten Hashwert H1 in der Sicherheitsspalte S abgelegt sein, oder in einer separaten Spalte.

Da sich alle Zeilen mindestens durch ihre in der Zeilennummernspalte Z gespeicherten Zeilennummer unterscheiden, ist es auch nicht möglich, eine Zeile samt Passwort zu kopieren und an anderer Stelle einzufügen, da der Hashwert dieser kopierten Zeile nicht mehr zur neuen Zeilennummer passt.

Figur 2 zeigt ein Ablaufdiagram für das Ändern von in einer Tabelle T gespeicherten Daten a1 - h4 einer Numerischen Steuerung. Die einzelnen Schritte sind im Folgenden erklärt.

### Schritt 1:

Im Schritt 1 wird eine Zeile N der Tabelle T zur Bearbeitung ausgewählt. Bearbeitung bedeutet, dass Daten e1, e2, e3, e4 dieser Zeile neu eingegeben oder geändert werden, oder dass der Passwortschutz der Zeile gesetzt oder aufgehoben wird. In diesem Schritt werden vom Bediener zunächst alle gewünschten Eingaben ausgeführt, die in den folgenden Schritten von der Steuerung geeignet abgearbeitet werden. Hierzu gehört auch die Eingabe eines Passworts in die aktuelle Zelle X der ausgewählten Zelle. Dieses Passwort wird dabei nicht in die Tabelle T eingetragen, sondern zur weiteren Verarbeitung zwischengespeichert.

### Verzweigungsschritt E1:

Im darauf folgenden Verzweigungsschritt E1 prüft die Steuerung, ob für diese Zeile bereits ein Passwort gesetzt ist, ob also in der aktuellen Zelle X der Sicherheitsspalte S für diese Zeile N ein gespeicherter Hashwert H1 eines in der Vergangenheit eingegebenen Passworts enthalten ist. Falls das nicht der Fall ist, verzweigt das Verfahren zum Verzweigungsschritt E2, andernfalls zum Schritt 3.

### Verzweigungsschritt E2:

Im Verzweigungsschritt E2 prüft die Steuerung, ob in Schritt 1 für die Zeile N ein neues Passwort in die Sicherheitsspalte S eingetragen wurde. Ist dies der Fall, verzweigt das Verfahren zum Schritt 5, andernfalls zum Schritt 2.

### Schritt 2:

Im Schritt 2 werden alle Änderungen an den Daten e1, e2, e3, e4 und gegebenenfalls am gespeicherten Hashwert H1 übernommen.

### Schritt 5:

Im Schritt 5 wird ein neuer Hashwert H2 des in Schritt 1 neu eingegebenen Passworts berechnet und in der aktuellen Zelle X der Sicherheitsspalte S in der bearbeiteten Zeile N gespeichert. Der neue Hashwert H2 wird damit zum gespeicherten Hashwert H1, und die ausgewählte Zeile N ist künftig geschützt. Das im Schritt 1 eingegebene Passwort wird verworfen. Danach folgt Schritt 2.

### Schritt 3:

Im Schritt 3 wird ein neuer Hashwert H2 des im Schritt 1 eingegebenen Passworts berechnet und dann das Verfahren mit dem Verzweigungsschritt E3 fortgesetzt. Bei der Berechnung wird ein evtl. vorangestelltes, für den Anfang eines Passworts verbotenes Zeichen nicht berücksichtigt.

### Verzweigungsschritt E3:

Im Verzweigungsschritt E3 wird geprüft, ob der neue Hashwert H2 des in Schritt 1 eingebebenen Passworts mit dem für diese Zeile gespeicherten Hashwert H1 übereinstimmt. Falls dies nicht der Fall ist, wird zum Schritt 4 verzweigt. Falls die Hashwerte H1, H2 übereinstimmen, wird zum Schritt 6 verzweigt.

### Schritt 4:

Im Schritt 4 werden alle Eingaben und Änderungen in bzw. an der Zeile N verworfen, weil kein korrektes Passwort eingegeben wurde.

### Schritt 6:

Im Schritt 6 wird noch überprüft, ob das für ein Passwort verbotene Zeichen am Anfang des in Schritt 1 eingegeben Passworts stand, und falls dies Zutrifft, der für die Zeile N gespeicherte Hashwert H1 des Passworts gelöscht. Die Zeile N ist damit nicht länger geschützt. Das Verfahren wird dann mit Schritt 2 fortgesetzt.

Im einfachsten Fall wird also zum Ändern einer nicht geschützten Zeile in Schritt 1 diese Zeile ausgewählt und z.B. das Konfigurationsdatum e3 überschrieben, ohne dabei ein Passwort einzugeben. Über die Verzweigungsschritte E1 und E2 wird dann zu Schritt 2 übergegangen, das geänderte Datum wird in die Tabelle T eingespeichert.

Wurde dabei ein neues Passwort in die Sicherheitsspalte S eingetragen, wird über E1 und E2 vorher noch zum Schritt 5 verzweigt. Mit dem Eintragen des neuen Hashwerts H2 des neuen Passworts in die Sicherheitsspalte S ist die bearbeitete Zeile N künftig geschützt, der neue Hashwert H2 wird zum gespeicherten Hashwert H1.

Beim Bearbeiten einer bereits geschützten Zeile N muss das korrekte Passwort angegeben werden, dessen im Schritt 3 berechneter neuer Hashwert H2 mit dem bereits gespeicherten Hashwert H1 verglichen wird. Stimmen die beiden Hashwerte H1, H2 überein, gelangt man letztlich zum Schritt 2, in dem alle Änderungen übernommen werden. Stimmen die Hashwerte H1, H2 nicht überein, werden die Änderungen im Schritt 4 verworfen.

Das hier beschriebene Verfahren zum Schützen von Daten ist so implementiert, dass alle nötigen Informationen in der zu schützenden Tabelle T selbst abgelegt sind. Der Schutz ist z.B. in Sicherungskopien der Tabelle T mit enthalten und nach einer Wiederherstellung dieser Sicherungskopie sofort wirksam. Eine aufwändige Verwaltung von Nutzerrechten wie im Stand der Technik ist nicht notwendig.

Der Hashwert des Passworts oder des Zeileninhalts kann mit einem beliebigen Verfahren berechnet werden, das ausreichend Sicherheit gegen das Herausfinden des Passworts durch Ausprobieren oder Rechnen bietet. Beispiele für bekannte Verfahren zum Bilden solcher Hashwerte sind CRC, MD5 oder SHA.

## Patentansprüche

1. Verfahren zum Schützen von in einer Tabelle (T) gespeicherten Daten (a1 - h4) einer Numerischen Steuerung für Werkzeugmaschinen gegen nicht autorisierte oder versehentliche Änderungen, gemäß dem in einer Sicherheitsspalte (S) der Tabelle (T) eine Information über den Schutz der in einer ausgewählten Zeile (N) enthaltenen Daten (a1 - h4) abgelegt ist, mit den folgenden Schritten:
- erstmaliges Eingeben eines Passworts in eine in der ausgewählten Zeile (N) liegende aktuelle Zelle (X) der Sicherheitsspalte (S),
- Berechnen eines neuen Hashwerts (H2) des Passworts und Speichern dieses Hashwerts in der aktuellen Zelle (X) als gespeicherter Hashwert (H1),
wobei bei einem erneuten, schreibenden Zugriff auf eine so geschützte, ausgewählte Zeile (N)
- das Passwort erneut in die aktuelle Zelle (X) der Sicherheitsspalte (S) eingegeben und der neue Hashwert (H2) des erneut eingegebenen Passworts berechnet
- und mit dem in der aktuellen Zelle (X) der Sicherheitsspalte (S) gespeicherten Hashwert (H1) verglichen wird,
wobei der schreibende Zugriff auf die ausgewählte Zeile (N) nur freigegeben wird, wenn der neue Hashwert (H2) und der gespeicherte Hashwert (H1) übereinstimmen, und wobei nach jeder Änderung an der ausgewählten Zeile (N) ein weiterer Hashwert (H3) gebildet und in der ausgewählten Zeile (N) abgelegt wird, wobei dieser weitere Hashwert (H3) auch über den in der ausgewählten Zeile (N) gespeicherten Hashwert (H1) gebildet wird, und wobei beim Einlesen einer Tabelle (T) der weitere Hashwert (H3) für jede Zeile erneut gebildet und mit dem zuletzt gespeicherten weiteren Hashwert (H3) verglichen wird, um anhand unterschiedlicher weiterer Hashwerte (H3) Veränderungen an der jeweiligen Zeile zu erkennen.

2. Verfahren nach Anspruch 1, gemäß dem der gespeicherte Hashwert (H1) der ausgewählten Zeile (N) gelöscht wird, wenn einem in die aktuelle Zelle (X) der Sicherheitsspalte (S) eingegebenen Passwort ein für den Anfang eines Passworts verbotenes Zeichen vorangestellt wurde, das beim Berechnen des neuen Hashwerts (H2) nicht berücksichtigt wird, und wenn der neue Hashwert (H2) mit dem gespeicherten Hashwert (H1) übereinstimmt.

3. Verfahren nach einem der vorhergehenden Ansprüche, **dadurch gekennzeichnet, dass** die Bedienoberfläche der Numerischen Steuerung die Tabelle (T) so anzeigt, dass gespeicherte Hashwerte (H1) mit Platzhaltern (P) dargestellt werden.

## Claims

1. Method for protecting data (a1-h4), which are stored in a table (T) and relate to a numerical controller for machine tools, against unauthorized or inadvertent changes, according to which an item of information relating to the protection of the data (a1-h4) contained in a selected row (N) is stored in a security column (S) of the table (T), having the following steps of:
- inputting a password for the first time to a current cell (X) of the security column (S) which is in the selected row (N),
- calculating a new hash value (H2) of the password and storing this hash value in the current cell (X) as a stored hash value (H1),
wherein, if there is renewed write access to a selected row (N) protected in this manner,
- the password is input to the current cell (X) of the security column (S) again and the new hash value (H2) of the password which has been input again is calculated
- and is compared with the hash value (H1) stored in the current cell (X) of the security column (S),
wherein write access to the selected row (N) is enabled only if the new hash value (H2) and the stored hash value (H1) correspond, and wherein a further hash value (H3) is formed after each change to the selected row (N) and is stored in the selected row (N), wherein this further hash value (H3) is also formed using the hash value (H1) stored in the selected row (N), and wherein, when reading in a table (T), the further hash value (H3) is formed again for each row and is compared with the further hash value (H3) which was stored last in order to detect changes to the respective row on the basis of different further hash values (H3).

2. Method according to Claim 1, according to which the stored hash value (H1) of the selected row (N) is deleted if a sign which is prohibited for the start of a password and is not taken into account when calculating the new hash value (H2) has been prefixed to a password input to the current cell (X) of the security column (S) and if the new hash value (H2) corresponds to the stored hash value (H1).

3. Method according to one of the preceding claims, **characterized in that** the user interface of the numerical controller displays the table (T) in such a manner that stored hash values (H1) are presented using placeholders (P).

## Revendications

1. Procédé de protection de données (a1 - h4), stockées dans une table (T), d'une commande numérique pour machines-outils contre des modifications non autorisées ou accidentelles, procédé dans lequel une information relative à la protection des données (a1 - h4) contenues dans une ligne sélectionnée (N) est stockée dans une colonne de sécurité (S) de la table (T), le procédé comprenant les étapes suivantes :
- entrer tout d'abord un mot de passe dans une cellule actuelle (X), située dans la ligne sélectionnée (N), de la colonne de sécurité (S),
- calculer une nouvelle valeur de hachage (H2) du mot de passe et stocker cette valeur de hachage dans la cellule actuelle (X) en tant que valeur de hachage stockée (H1),
lors d'un nouvel accès en écriture à une ligne sélectionnée (N) ainsi protégée
- le mot de passe étant entré à nouveau dans la cellule actuelle (X) de la colonne de sécurité (S) et la nouvelle valeur de hachage (H2) du mot de passe nouvellement entré étant calculée,
- et comparée à la valeur de hachage (H1) mémorisée dans la cellule actuelle (X) de la colonne de sécurité (S),
l'accès en écriture à la ligne sélectionnée (N) étant activé uniquement lorsque la nouvelle valeur de hachage (H2) et la valeur de hachage mémorisée (H1) correspondent, et après chaque modification apportée à la ligne sélectionnée (N), une autre valeur de hachage (H3) étant formée et stockée dans la ligne sélectionnée (N), cette autre valeur de hachage (H3) étant également formée par le biais de la valeur de hachage (H1) stockée dans la ligne sélectionnée (N) et, lors de la lecture d'une table (T), l'autre valeur de hachage (H3) étant formée à nouveau pour chaque ligne et comparée à l'autre valeur de hachage (H3) mémorisée en dernier afin de détecter des modifications apportées à la ligne respective sur la base d'autres valeurs de hachage (H3) différentes.

2. Procédé selon la revendication 1, dans lequel la valeur de hachage mémorisée (H1) de la ligne sélectionnée (N) est effacée si un mot de passe entré dans la cellule actuelle (X) de la colonne de sécurité (S) a été précédé d'un caractère interdit au début d'un mot de passe, lequel caractère n'est pas pris en compte lors du calcul de la nouvelle valeur de hachage (H2) et lorsque la nouvelle valeur de hachage (H2) correspond à la valeur de hachage mémorisée (H1).

3. Procédé selon l'une des revendications précédentes, **caractérisé en ce que** l'interface utilisateur de la commande numérique affiche la table (T) afin de représenter des valeurs de hachage mémorisées (H1) par des caractères de remplacement (P).
